# EUROPÄISCHE PATENTSCHRIFT

(11) **EP 4 080 251 B1**
(45) Veröffentlichungstag und Bekanntmachung des Hinweises auf die Patenterteilung: **31.01.2024**
(21) Anmeldenummer: 21169136.5
(22) Anmeldetag: 19.04.2021
(51) Int. Cl.: G01V 8/10, G01V 1/20

(54) **SENSOR UND VERFAHREN ZUM BETRIEB EINES SENSORS**
SENSOR AND METHOD FOR OPERATING SAME
CAPTEUR ET PROCÉDÉ DE FONCTIONNEMENT D'UN CAPTEUR

(43) Veröffentlichungstag der Anmeldung: 26.10.2022
(73) Patentinhaber: Leuze electronic GmbH + Co. KG, 73277 Owen/Teck (DE)
(72) Erfinder: Koperski, Joachim, 85521 Ottobrunn (DE); Feller, Bernhard, 86316 Friedberg (DE)
(74) Vertreter: Ruckh, Rainer Gerhard

(56) Entgegenhaltungen:
- EP-A2- 2 587 280
- DE-U1-202016 107 317
- US-A1- 2012 160 030

## Beschreibung

Die Erfindung betrifft einen Sensor und ein Verfahren zum Betrieb eines Sensors.

Mit derartigen Sensoren erfolgt generell eine Objektüberwachung innerhalb eines Überwachungsbereichs. Der Überwachungsbereich kann einen zweidimensionalen Bereich, insbesondere eine ebene Fläche bilden. Weiterhin kann mit dem Sensor auch ein räumliches Sichtfeld erfasst werden. Wird mit dem Sensor ein Objekt im Überwachungsbereich erkannt, wird als Ausgangssignal ein entsprechendes Objektfeststellungssignal generiert. Derartige Sensoren können insbesondere als optische Sensoren, Ultraschallsensoren oder Radarsensoren ausgebildet sein.

Für den Einsatz in sicherheitstechnischen Applikationen können die Sensoren als Sicherheitssensoren, das heißt als Sensoren mit einem fehlersicheren Aufbau, ausgebildet sein.

Typischerweise erfolgt mit dem Sicherheitssensor eine Objektüberwachung innerhalb eines im Überwachungsbereich liegenden Schutzfelds. Wird im Schutzfeld mit dem Sicherheitssensor ein sicherheitskritischer Objekteingriff registriert, wird durch den Sicherheitssensor eine Sicherheitsfunktion ausgelöst.

Zur Anpassung an unterschiedliche Applikationen und Einsatzgebiete ist eine Parametrierung des Sensors erforderlich, das heißt es müssen Parameter festgelegt werden, die die Sensorfunktionen des Sensors definieren.

Hierzu ist typischerweise eine externe Einheit wie ein Parametriergerät, ein Computer und dergleichen erforderlich. Der Sensor muss eine Kommunikationsschnittstelle aufweisen, über welche die externe Einheit angeschlossen werden kann. Die Kommunikationsschnittstelle kann leitungsgebunden sein oder berührungslos arbeiten. Beispiele für derartige Kommunikationsschnittstellen sind Bluetooth-, USB- oder Ethernet-Schnittstellen.

Weiterhin ist es bekannt, am Sensor selbst Schalter, insbesondere Dipschalter oder Stöpselschalter vorzusehen, um durch deren Betätigung Sensorfunktionen einzustellen.

Nachteilig bei all diesen Varianten ist ein relativ großer Hardwareaufwand, der zur Parametrierung erforderlich ist.

Die EP 2 587 280 A2 betrifft eine Ausrichthilfe für einen Sensorsignale generierenden Sensor, umfassend wenigstens einen Beschleunigungssensor, dessen Ausgangssignale in einer Auswerteeinheit als Maß für die Güte der Ausrichtung des Sensors bezüglich einer Solllage verarbeitet werden. Die Ausrichthilfe weist eine Anzeigeeinheit auf, mittels derer die aktuelle Ausrichtung des Sensors visualisiert ist.

Der Erfindung liegt die Aufgabe zugrunde für einen Sensor der eingangs genannten Art eine einfache Parametrierung bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Sensor zur Erfassung von Objekten in einem Überwachungsbereich, mit Sensorkomponenten, welche zur Erfassung von Objekten ausgebildet sind, und mit einer Auswerteeinheit, in welcher in Abhängigkeit von Ausgangssignalen von Sensorkomponenten ein Objektfeststellungssignal generiert wird. Im Sensor ist wenigstens ein Schwerkraftsensor integriert, wobei die Messsignale des Schwerkraftsensors dessen räumliche Orientierung relativ zur Richtung der Schwerkraft (F) angeben. Im Sensor wird abhängig von den Messsignalen selbsttätig wenigstens eine Sensorfunktion ausgewählt. Dadurch wird eine Parametrierung des Sensors durchgeführt.

Die Erfindung betrifft weiterhin ein Verfahren zum Betrieb eines Sensors.

Die Auswahl von Sensorfunktionen, das heißt eine Parametrierung des Sensors erfolgt erfindungsgemäß völlig selbsttätig über den wenigstens einen im Sensor integrierten Schwerkraftsensor. Das Funktionsprinzip ist derart, dass der Schwerkraftsensor dessen Lage und damit die Lage des Sensors relativ zur Richtung der Schwerkraft erkennt. Abhängig von den Messsignalen wird dann wenigstens eine Sensorfunktion ausgewählt und im Sensor selbsttätig aktiviert. Dies bedeutet, dass für verschiedene Orientierungen des Sensors im Raum unterschiedliche Sensorfunktionen aktiviert werden, wobei besonders vorteilhaft die Sensorfunktionen an diese Orientierungen angepasst oder hinsichtlich dieser optimiert sind.

Besonders vorteilhaft ist der Sensor in unterschiedlichen Einbaulagen installierbar. In den einzelnen Einbaulagen wird abhängig von den Messsignalen des Schwerkraftsensors eine Sensorfunktion ausgewählt.

Die Auswahl der Sensorfunktion erfolgt vorteilhaft während eines Einlernvorgangs vor Aufnahme des Arbeitsbetriebs des Sensors. Dabei kann der Einlernvorgang selbsttätig aktiviert werden, beispielsweise nach Einschalten der Stromversorgung des Sensors.

Ein wesentlicher Vorteil der Erfindung besteht darin, dass zur Durchführung der Parametrierung des Sensors keine externe Einheit wie zum Beispiel ein Parametriergerät vorgesehen werden muss. Auch eine Software zur Parametrierung des Sensors ist nicht erforderlich. Weiterhin müssen am Sensor auch keine Kommunikationsschnittstellen zum Einlesen von Parameterbefehlen vorgesehen sein. Schließlich muss auch am Sensor keine Hardware wie Schalter für eine Parametrierung des Sensors vorgesehen werden.

Damit kann bei dem erfindungsgemäßen Sensor auf einfache Weise und ohne zusätzlichen Hardware- und Software-Aufwand eine Parametrierung des Sensors durchgeführt werden.

Gemäß einer vorteilhaften Ausgestaltung ist der Schwerkraftsensor ein dreiachsiger Beschleunigungssensor, mittels dessen seine räumliche Orientierung zur Erdbeschleunigung bestimmbar ist.

Insbesondere ist der Schwerkraftsensor ein kapazitiver Beschleunigungssensor, ein piezoelektrischer Beschleunigungssensor oder ein Interferometer.

Besonders vorteilhaft ist der Schwerkraftsensor ein MEMS(micro electromechanical system)-Sensor.

Der Schwerkraftsensor weist damit eine besonders kleine Bauform auf und kann einfach im Sensor integriert werden.

Die Funktionalität des Sensors kann dahingehend noch erweitert werden, dass der Schwerkraftsensor für eine Ausrichteinheit genutzt wird. Die mit dem Schwerkraftsensor generierten Messsignale liefern eine genaue Information über die Orientierung des Sensors im Raum. Diese kann mittels einer Anzeigeeinheit visualisiert werden. Ein Benutzer kann dann anhand der an der Anzeigeeinheit dargestellten Informationen des Sensors ausrichten und justieren.

Besonders vorteilhaft erfolgt die Darstellung der Anzeige von Informationen an der Anzeigeeinheit abhängig von den Messwerten des Schwerkraftsensors. Ist beispielsweise bei einer Installation der Sensor auf den Kopf gestellt, gilt dies auch für die Anzeigeeinheit. Der Schwerkraftsensor erkennt dies und dreht die angezeigten Informationen um 180°, so dass die für den Benutzer einfach lesbar sind.

Generell können mit den oder einer weiteren Anzeigeeinheit auch weitere Informationen, zum Beispiel Diagnosedaten angezeigt werden.

Gemäß einer vorteilhaften Ausführungsform ist der Sensor als Sicherheitssensor ausgebildet.

Der Sicherheitssensor weist dann einen fehlersicheren Aufbau, insbesondere eine redundante zweikanalige Auswerteeinheit auf, so dass im Sicherheitssensor auftretende Fehler aufgedeckt werden. Der Sicherheitssensor kann dann für sicherheitstechnische Applikationen eingesetzt werden, insbesondere zur Gefahrenbereichsüberwachung an gefahrbringenden Anlagen.

Wird mit dem Sicherheitssensor im Schutzfeld ein sicherheitskritischer Objekteingriff registriert, wird eine Sicherheitsfunktion generiert, insbesondere derart, dass die Anlage in einen nichtgefahrbringenden Betriebsmodus umgeschaltet wird oder komplett abgeschaltet wird.

Besonders vorteilhaft weist der Sicherheitssensor eine redundante Anordnung von Schwerkraftsensoren auf.

Durch die redundante Anordnung von Schwerkraftsensoren wird eine fehlersichere Auswahl und Aktivierung von Sensorfunktionen gewährleistet.

Insbesondere können zwei Schwerkraftsensoren in einem Sensor, insbesondere in einem Sensorgehäuse integriert sein, wobei dann beide Schwerkraftsensoren dessen Orientierung zur Richtung der Schwerkraft bestimmen. Die Messsignale der Schwerkraftsensoren können dann für eine Fehlerkontrolle miteinander verglichen werden, wobei nur im fehlerfreien Fall die Aktivierung der jeweiligen Sensorfunktion freigegeben wird und ansonsten eine Fehlermeldung generiert wird.

Der erfindungsgemäße Sensor kann als Radarsensor, Ultraschallsensor oder als optischer Sensor ausgebildet sein.

Ein optischer Sensor kann vorteilhaft als Lichtvorhang oder Reflexions-Lichtvorhang ausgebildet sein.

Ein Reflexions-Lichtvorhang weist eine in einem Gehäuse integrierte Sende-Empfangseinheit mit einer Anzahl von Lichtstrahlen emittierenden Sendern und Lichtstrahlen empfangenden Empfängern auf. Die Sende-Empfangseinheit ist an einem Rand des Überwachungsbereichs angeordnet, am gegenüberliegenden Rand des Überwachungsbereichs befindet sich ein Reflektor. Bei freiem Überwachungsbereich werden die Lichtstrahlen der Sender zum Reflektor geführt und von diesem zurück zu dem jeweils zugeordneten Empfänger geführt. Ein Objekt im Überwachungsbereich wird dadurch erkannt, dass durch dieses der Strahlengang der Lichtstrahlen wenigstens eines Senders unterbrochen wird. In diesem Fall ist der Schwerkraftsensor im Gehäuse der Sende-Empfangseinheit integriert.

Ein als Lichtvorhang ausgebildeter optischer Sensor weist eine Sendeeinheit mit einer Anordnung von Lichtstrahlen emittierenden Sendern und eine Empfangseinheit mit einer Anordnung von Lichtstrahlen empfangenden Empfängern auf. In der Sendeeinheit und/oder in der Empfangseinheit ist ein Schwerkraftsensor zur Vorgabe von Sensorfunktionen vorgesehen. Der Lichtvorhang arbeitet nach dem Lichtschrankenprinzip. Die Sendeeinheit und die Empfangseinheit sind an gegenüberliegenden Rändern des Überwachungsbereichs angeordnet, so dass bei freiem Überwachungsbereich die Lichtstrahlen der Sender auf die zugeordneten Empfänger treffen. Ein Objekt im Überwachungsbereich wird dadurch erkannt, dass durch dieses der Strahlengang der Lichtstrahlen wenigstens eines Senders unterbrochen wird.

Im einfachsten Fall ist entweder in der Sendeeinheit oder in der Empfangseinheit ein Schwerkraftsensor integriert, wobei anhand der Messsignale des Schwerkraftsensors eine Auswahl und Aktivierung von Sensorfunktionen erfolgt.

Besonders vorteilhaft ist sowohl in der Sendeeinheit als auch in der Empfangseinheit ein Schwerkraftsensor, wobei abhängig von den Messsignalen beider Schwerkraftsensoren Sensorfunktionen ausgewählt werden. Dabei ergänzen sich diese Sensorfunktionen vorteilhaft.

Insbesondere können dann als Sensorfunktionen eine parallele oder antiparallele Ausrichtung der Sendereinheit und Empfängereinheit des Lichtvorhangs vorgegeben und kontrolliert werden.

Beispielswiese können anhand der Messsignale des Schwerkraftsensors in der Sendeeinheit Sendeleistungen der Sender und anhand der Messsignale des Schwerkraftsensors der Empfangseinheit Empfangssignalverstärkungen der Empfänger eingestellt werden, um so die Nachweisempfindlichkeit des Lichtvorhangs vorzugeben.

Gemäß einer vorteilhaften Ausgestaltung erfolgt eine fehlersichere Einstellung einer Sensorfunktion dadurch, dass diese sowohl mit dem Schwerkraftsensor der Sendeeinheit als auch mit dem Schwerkraftsensor der Empfangseinheit vorgegeben wird, und dass die mit dem Schwerkraftsensor vorgegebene Sensorfunktion mittels Lichtstrahlen zu Empfängern der Empfangseinheit übertragen wird und in der Empfangseinheit mit der durch den Schwerkraftsensor der Empfangseinheit vorgegebenen Sensorfunktion verglichen wird.

Gemäß einer weiteren vorteilhaften Ausgestaltung erfolgt eine fehlersichere Einstellung einer Sensorfunktion dadurch, dass der Schwerkraftsensor der Sendeeinheit und/oder Schwerkraftsensor der Empfangseinheit 2-kanalig ausgeführt sind und ein Vergleich der durch die jeweiligen Schwerkraftsensoren in der Sendeeinheit und/oder Empfangseinheit durchgeführt wird und bei Abweichung ein Fehler gemeldet wird oder ein sicherer Zustand eingenommen wird.

Mit der gegenseitigen Kontrolle der redundanten Ausführung von Schwerkraftsensoren in der Sendereinheit einerseits und in der Empfängereinheit andererseits, wird eine besonders hohe Fehlersicherheit gewährleistet.

Ein sicherer Zustand ist insbesondere dadurch definiert, dass mit dem Lichtvorhang eine von diesem überwachte Anlage abgeschaltet wird, so dass von dieser keine Gefahren mehr ausgehen können.

Dabei wird nur bei einem positiven Vergleichsergebnis die Sensorfunktion aktiviert. Bei einem negativen Vergleichsergebnis wird eine Fehlermeldung generiert.

Vorteilhaft sind den Lichtstrahlen Kodierungen aufgeprägt.

Dann können Sensorfunktionen durch die Art von Kodierungen der Lichtstrahlen bestimmt sein.

Weiterhin werden zur Übertragung einer Sensorfunktion Kodierungen von Lichtstrahlen geändert.

Die Erfindung wird im Folgenden anhand der Zeichnungen erläutert. Es zeigen:
- Figur 1:: Ausführungsbeispiel eines erfindungsgemäßen Sensors in Form eines Lichtvorhangs.
- Figuren 2a, b:: Erste Anordnungen von zwei Lichtvorhängen.
- Figuren 3a, b:: Zweite Anordnungen von zwei Lichtvorhängen.
- Figuren 4a, b:: Dritte Anordnungen von zwei Lichtvorhängen.
- Figur 5:: Einzeldarstellung eines Lichtvorhangs
a) vor einer Ausrichtung,
b) nach erfolgter Ausrichtung.

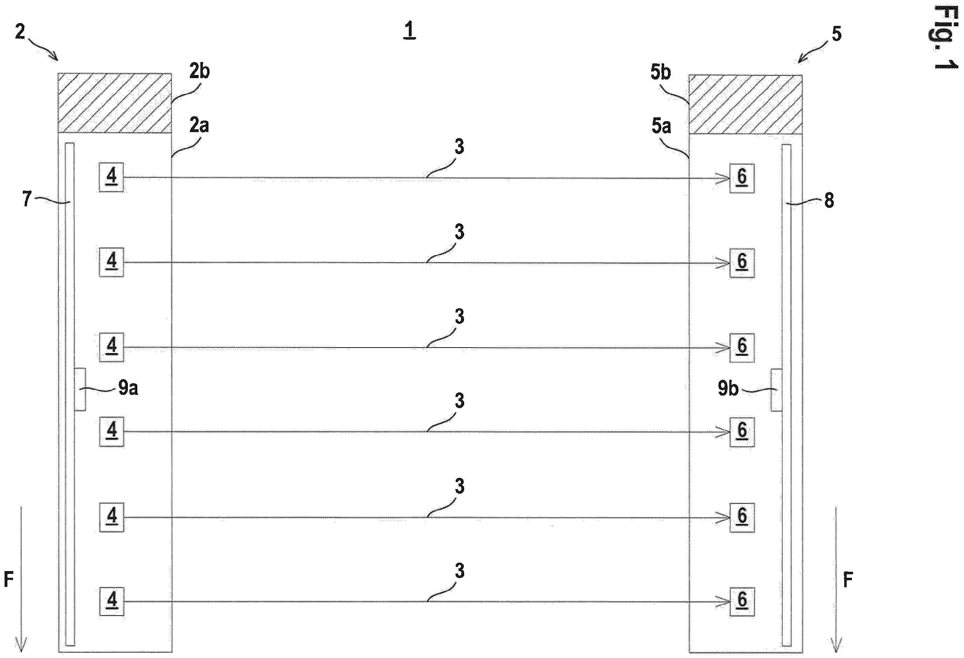

Figur 1 zeigt ein Ausführungsbeispiel des erfindungsgemäßen Sensors in Form eines Lichtvorhangs 1, wobei der Sensor als Sicherheitssensor ausgebildet ist, mit dem eine Schutzfeldüberwachung durchgeführt wird.

Der Lichtvorhang 1 umfasst als Sensorkomponenten eine in einem ersten Gehäuse 2a angeordnete Sendeeinheit 2 mit einer Reihenanordnung von Lichtstrahlen 3 emittierenden Sendern 4 und eine in einem zweiten Gehäuse 5a angeordnete Empfangseinheit 5 mit einer Reihenanordnung von Empfängern 6. Die Oberseite des Gehäuses 2a ist mit einer Kappe 2b abgeschlossen. Die Oberseite des Gehäuses 5a ist ebenfalls mit einer Kappe 5b abgeschlossen. Die Lichtstrahlen 3 definieren Strahlachsen des Lichtvorhangs 1 und spannen als Überwachungsbereich ein flächiges Schutzfeld auf, das in einer vertikalen Ebene orientiert ist. Die Sender 4 emittieren Lichtstrahlen 3 in Form von Lichtpulsen, welchen Kodierungen aufgeprägt sind.

Die Sender 4 werden einzeln nacheinander zyklisch mittels einer Sendersteuerung aktiviert. Die nicht gesondert dargestellten Komponenten der Sendersteuerung sind auf einer Platine 7 angeordnet. Natürlich können auch mehrere Platinen 7 vorgesehen sein. Die Empfänger 6 werden in bekannter Weise optisch auf die Sender 4 synchronisiert. Die Synchronisierung erfolgt anhand einer Strahlachse, wobei sich die Kodierung der Lichtstrahlen 3 dieser Strahlachse vorteilhaft von den Kodierungen der restlichen Strahlachsen unterscheidet.

Die in den Empfängern 6 generierten Empfangssignale werden in einer Auswerteeinheit zur Generierung eines binären Schaltsignals ausgewertet. Zur Erfüllung der sicherheitstechnischen Anforderungen, das heißt zur Ausbildung des Lichtvorhangs 1 als Sicherheitssensor, weist die Auswerteeinheit wieder einen redundanten, vorzugsweise zweikanaligen Aufbau auf. Die nicht gesondert dargestellten Komponenten der Auswerteeinheit sind auf einer Platine 8 angeordnet. Auch in diesem Fall können prinzipiell mehrere Platinen 8 vorgesehen sein. Die Schaltzustände des Schaltsignals geben an, ob sich ein Objekt im Schutzfeld befindet oder nicht. Bei freiem Schutzfeld treffen die Lichtstrahlen 3 aller Sender 4 ungehindert auf den zugeordneten Empfänger 6. Bei einem Objekteingriff im Schutzfeld werden durch das Objekt die Lichtstrahlen 3 wenigstens eines Senders 4 unterbrochen.

Wird mit dem Sicherheitssensor ein sicherheitskritischer Objekteingriff im Schutzfeld registriert, wird durch das Schaltsignal eine Sicherheitsfunktion ausgelöst, insbesondere eine gefahrbringende Anlage, die mit dem Sicherheitssensor überwacht wird, stillgesetzt.

Sowohl auf der Platine 7 der Sendeeinheit 2 als auch auf der Platine 8 der Empfangseinheit 5 befindet sich ein Schwerkraftsensor 9a, 9b. Mit den vom jeweiligen Schwerkraftsensor 9a, 9b generierten Messsignalen wird dessen Orientierung zur Richtung der Schwerkraft (in den Figuren 1 bis 5 mit F bezeichnet) bestimmt.

Der Schwerkraftsensor 9a der Sendeeinheit 2 ist auf der Platine 7 montiert, die an der Rückwand des quaderförmigen Gehäuses 2a der Sendeeinheit 2 anliegt. Damit wird mit dem Schwerkraftsensor 9a die Ausrichtung des Gehäuses 2a der Sendeeinheit 2 zur Richtung der Schwerkraft F bestimmt.

Entsprechend ist der Schwerkraftsensor 9b der Empfangseinheit 5 auf der Platine 8 montiert, die an der Rückwand des quaderförmigen Gehäuses 5a der Empfangseinheit 5 anliegt. Damit wird mit dem Schwerkraftsensor 9b die Ausrichtung des Gehäuses 5a der Empfangseinheit 5 zur Richtung der Schwerkraft F bestimmt.

Die Schwerkraftsensoren 9a, 9b sind jeweils von einem dreiachsigen Beschleunigungssensor gebildet, mit welchem die räumliche Orientierung zur Erdbeschleunigung bestimmt wird. Vorteilhaft sind die Schwerkraftsensoren 9a, 9b als MEMS(micro electromechanical system)-Sensoren ausgebildet.

Prinzipiell können die Schwerkraftsensoren 9a, 9b als piezoelektrische Beschleunigungssensoren oder Interferometer ausgebildet sein.

Im vorliegenden Fall sind die Schwerkraftsensoren 9a, 9b als kapazitive, dreiachsige Beschleunigungssensoren ausgebildet. Für jede Achse ist eine Anordnung von stationären Elektroden und eine Anordnung von diesen zugeordneten, beweglich, insbesondere federnd gelagerten Gegenelektroden vorgesehen. Je nach Ausrichtung dieser Anordnung zur Richtung der Erdbeschleunigung werden durch diese die Gegenelektroden unterschiedlich ausgelenkt, wodurch der Abstand zwischen Elektroden und Gegenelektroden geändert wird. Dadurch liefert die Anordnung eine bestimmte Kapazität als Messwert.

Erfindungsgemäß werden abhängig von den Messsignalen der Schwerkraftsensoren 9a, 9b Sensorfunktionen des Lichtvorhangs 1 ausgewählt und selbsttätig aktiviert.

Vorteilhaft erfolgt dabei die Vorgabe der Sensorfunktionen abhängig von verschiedenen Installationen, in den der Lichtvorhang 1 in unterschiedlichen Einbaulagen montiert wird. Die Schwerkraftsensoren 9a, 9b erkennen die unterschiedlichen Richtungen der Sendeeinheit 2 beziehungsweise Empfangseinheit 5, wodurch im Lichtvorhang 1 unterschiedliche Sensorfunktionen aktiviert werden.

Prinzipiell ist es für eine selbsttätige Vorgabe von Sensorfunktionen ausreichend, wenn entweder in der Sendeeinheit 2 oder in der Empfangseinheit 5 ein Schwerkraftsensor 9a, 9b vorhanden ist.

Im vorliegenden Fall ist sowohl in der Sendeeinheit 2 ein Schwerkraftsensor 9a als auch in der Empfangseinheit 5 ein Schwerkraftsensor 9b vorgesehen, wobei insbesondere mittels der Schwerkraftsensoren 9a, 9b unterschiedliche Sensorfunktionen vorgegeben werden können, die sich vorzugsweise ergänzen. Beispielsweise können anhand der Messwerte des Schwerkraftsensors 9a der Sendeeinheit 2 Sendeleistungen der Sender 4 als Sensorfunktionen vorgegeben werden. Anhand der Messwerte des Schwerkraftsensors 9b können Empfangssignalverstärkungen als Sensorfunktionen vorgegeben werden. Die beiden Sensorfunktionen ergänzen sich zu einer Empfindlichkeitseinstellung des Lichtvorhangs 1.

Besonders vorteilhaft werden der Schwerkraftsensor 9a der Sendeeinheit 2 und der Schwerkraftsensor 9b der Empfangseinheit 5 als redundante Anordnung für eine fehlersichere Vorgabe von Sensorfunktionen genutzt.

Dabei erfolgt eine fehlersichere Einstellung einer Sensorfunktion dadurch, dass diese sowohl mit dem Schwerkraftsensor 9a der Sendeeinheit 2 als auch mit dem Schwerkraftsensor 9b der Empfangseinheit 5 vorgegeben wird. Die mit Schwerkraftsensor 9a vorgegebene Sensorfunktion wird mittels Lichtstrahlen 3 zu Empfängern 6 der Empfangseinheit 5 übertragen und wird in der Empfangseinheit 5 mit der durch den Schwerkraftsensor 9b der Empfangseinheit 5 vorgegebenen Sensorfunktion verglichen. Nur bei einem positiven Vergleichsergebnis wird die Sensorfunktion aktiviert. Bei einem negativen Vergleichsergebnis wird eine Fehlermeldung generiert. Zur Übertragung einer Sensorfunktion werden Kodierungen von Lichtstrahlen 3 geändert.

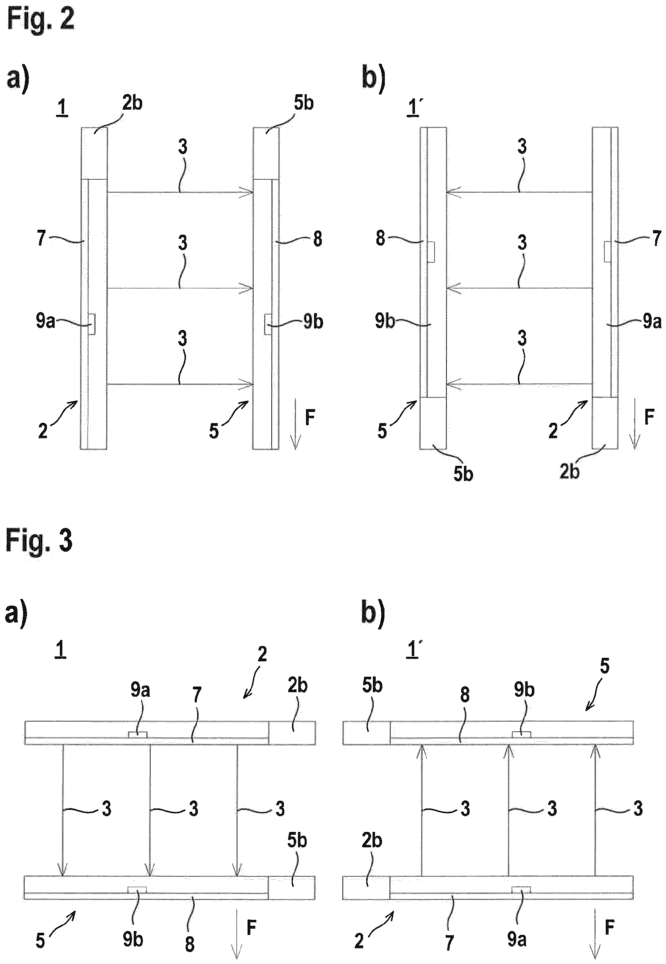

Die Figuren 2a, 2b zeigen eine Anordnung von zwei benachbart zueinander angeordneten Lichtvorhängen 1, 1', deren Aufbau jeweils dem Lichtvorhang 1 gemäß Figur 1 entspricht.

Der Lichtvorhang 1 ist in Normalstellung aufgestellt, das heißt mit in vertikaler Richtung ausgerichteten Sendeeinheit 2 und Empfangseinheit 5, deren Kappen 2b, 5b obenliegend angeordnet sind.

Der Lichtvorhang 1' ist um 180° gegenüber dem Lichtvorhang 1 gedreht, so dass die Kappen 2b, 5b der Sendeeinheit 2 beziehungsweise Empfangseinheit 5 unten liegen.

Die verschiedenen Orientierungen der Lichtvorhänge 1, 1' werden mit den Schwerkraftsensoren 9a, 9b, die in deren Sendeeinheit 2 und Empfangseinheit 5 integriert sind, erkannt. Abhängig von den verschiedenen Orientierungen werden für die Lichtvorhänge 1, 1' unterschiedliche Sensorfunktionen ausgewählt, zum Beispiel dass deren Lichtstrahlen 3 individuelle Kodierungen aufgeprägt werden. Dadurch werden gegenseitige Beeinflussungen bei mit den Lichtvorhängen 1, 1' durchgeführten Objektdetektionen vermieden.

Die Figuren 3a, 3b zeigen eine erste Variante der Ausführungsform gemäß Figur 2. In diesem Fall sind die Lichtvorhänge 1, 1' waagerecht angeordnet. Wiederum ist der Lichtvorhang 1' bezüglich des Lichtvorhangs 1 um 180° gedreht und zwar derart, dass bei dem Lichtvorhang 1' die Empfangseinheit 5 oben und die Sendeeinheit 2 unten liegt, während bei dem Lichtvorhang 1 die Sendeeinheit 2 oben und die Empfangseinheit 5 unten liegt.

Auch hier erkennen die Schwerkraftsensoren 9a, 9b die unterschiedlichen Orientierungen der Lichtvorhänge 1, 1', so dass für diese als unterschiedliche Sensorfunktionen unterschiedliche Kodierungen der Lichtstrahlen 3 zur Vermeidung von gegenseitigen Beeinflussungen vorgegeben werden.

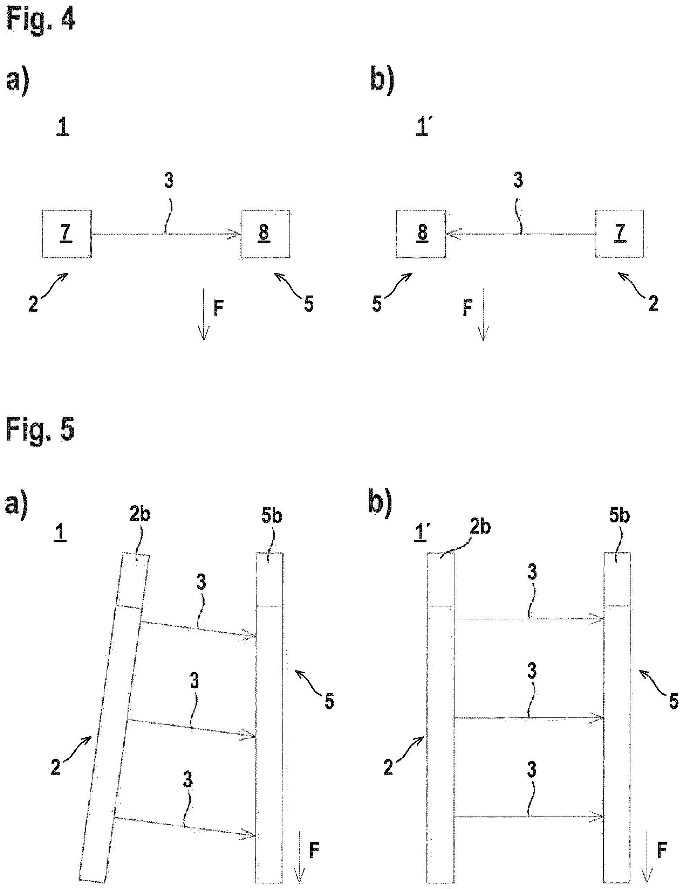

Die Figuren 4a, 4b zeigen eine weitere Variante der Ausführungsform gemäß Figur 2. In diesem Fall sind die Lichtvorhänge 1, 1' liegend montiert, wobei der Lichtvorhang 1' wieder um 180° gegenüber dem Lichtvorhang 1 gedreht ist.

Auch hier erkennen die Schwerkraftsensoren 9a, 9b die unterschiedlichen Orientierungen der Lichtvorhänge 1, 1', so dass für diese als unterschiedliche Sensorfunktionen zum Beispiel unterschiedliche Kodierungen der Lichtstrahlen 3 zur Vermeidung von gegenseitigen Beeinflussungen vorgegeben werden.

Die Messwerte der Schwerkraftsensoren 9a, 9b des Lichtvorhangs 1 können auch für die Ausbildung von Ausrichteinheiten genutzt werden. Anhand der Messwerte der Schwerkraftsensoren 9a, 9b wird in einer dem jeweiligen Schwerkraftsensor 9a, 9b zugeordneten Anzeige die aktuelle Lage der Sendeeinheit 2 beziehungsweise Empfangseinheit 5 angezeigt, so dass ein Benutzer anhand der aktuellen Anzeigen die Sendeeinheit 2 beziehungsweise Empfangseinheit 5 ausrichten kann. Vorteilhaft wird abhängig von den Messwerten der Schwerkraftsensoren 9a, 9b die jeweilige Anzeigeeinheit so angesteuert, dass abhängig von der aktuellen Orientierung der Sendeeinheit 2 beziehungsweise Empfangseinheit 5 die Orientierung der Anzeige auf der Anzeigeeinheit so gewählt ist, dass sie von einem Benutzer leicht abgelesen werden kann.

Ein Beispiel hierfür zeigen die Figuren 5a, 5b.

Figur 5a zeigt eine Anordnung, bei der die Sendeeinheit 2 schräg steht und gegenüber der Empfangseinheit 5 fehlausgerichtet ist. Durch die Ausrichteinheit und zugeordneten Anzeigeeinheiten kann diese Fehleinstellung behoben werden, wie Figur 5b zeigt.
Leuze electronic GmbH + Co. KG
73277 Owen/Teck

### Bezugszeichenliste

- (1, 1'): Lichtvorhang
- (2): Sendeeinheit
- (2a): Gehäuse
- (2b): Kappe
- (3): Lichtstrahl
- (4): Sender
- (5): Empfangseinheit
- (5a): Gehäuse
- (5b): Kappe
- (6): Empfänger
- (7): Platine
- (8): Platine
- (9a, b): Schwerkraftsensor
- F: Richtung der Schwerkraft

## Patentansprüche

1. Sensor zur Erfassung von Objekten in einem Überwachungsbereich, mit Sensorkomponenten, welche zur Erfassung von Objekten ausgebildet sind, und mit einer Auswerteeinheit, in welcher in Abhängigkeit von Ausgangssignalen von Sensorkomponenten ein Objektfeststellungssignal generiert wird, wobei im Sensor wenigstens ein Schwerkraftsensor (9a, 9b) integriert ist, wobei die Messsignale des Schwerkraftsensors (9a, 9b) dessen räumliche Orientierung relativ zur Richtung der Schwerkraft (F) angeben,
**dadurch gekennzeichnet,**
**dass** im Sensor abhängig von den Messsignalen selbsttätig wenigstens eine Sensorfunktion ausgewählt wird, wodurch eine Parametrierung des Sensors durchgeführt wird.

2. Sensor nach Anspruch 1, **dadurch gekennzeichnet, dass** der Schwerkraftsensor (9a, 9b) ein dreiachsiger Beschleunigungssensor ist, mittels dessen seine räumliche Orientierung zur Erdbeschleunigung bestimmbar ist.

3. Sensor nach einem der Ansprüche 1 oder 2, **dadurch gekennzeichnet, dass** der Schwerkraftsensor (9a, 9b) ein MEMS(micro electromechanical system)-Sensor ist.

4. Sensor nach einem der Ansprüche 2 oder 3, **dadurch gekennzeichnet, dass** der Schwerkraftsensor (9a, 9b) ein kapazitiver Beschleunigungssensor, ein piezoelektrischer Beschleunigungssensor oder ein Interferometer ist.

5. Sensor nach einem der Ansprüche 1 bis 4, **dadurch gekennzeichnet, dass** dieser in unterschiedlichen Einbaulagen installierbar ist, und dass in den einzelnen Einbaulagen abhängig von den Messsignalen des Schwerkraftsensors (9a, 9b) eine Sensorfunktion ausgewählt wird.

6. Sensor nach Anspruch 1 bis 5, **dadurch gekennzeichnet, dass** der Schwerkraftsensor (9a, 9b) Bestandteil einer Ausrichteinheit ist.

7. Sensor nach Anspruch 6, **dadurch gekennzeichnet, dass** die Ausrichteinheit eine Anzeigeeinheit aufweist, wobei die dort dargestellten Anzeigen abhängig von der mit dem Schwerkraftsensor (9a, 9b) ermittelten räumlichen Orientierung sind.

8. Sensor nach einem der Ansprüche 1 bis 7, **dadurch gekennzeichnet, dass** dieser ein Sicherheitssensor ist.

9. Sensor nach Anspruch 8, **dadurch gekennzeichnet, dass** der Sicherheitssensor eine redundante Anordnung von Schwerkraftsensoren (9a, 9b) aufweist.

10. Sensor nach einem der Ansprüche 1 bis 9, **dadurch gekennzeichnet, dass** dieser ein optischer Sensor, ein Radarsensor oder ein Ultraschallsensor ist.

11. Sensor nach Anspruch 10, **dadurch gekennzeichnet, dass** der optische Sensor als Lichtvorhang (1) oder ein Reflexions-Lichtvorhang ausgebildet ist.

12. Sensor nach einem der Ansprüche 1 bis 11, **dadurch gekennzeichnet, dass** ein als Lichtvorhang (1) ausgebildeter optischer Sensor eine Sendeeinheit (2) mit einer Anordnung von Lichtstrahlen (3) emittierenden Sendern (4) und eine Empfangseinheit (5) mit einer Anordnung von Lichtstrahlen (3) empfangenden Empfängern (6) aufweist, wobei in der Sendeeinheit (2) und/oder in der Empfangseinheit (5) ein Schwerkraftsensor (9a, 9b) zur Vorgabe von Sensorfunktionen vorgesehen ist.

13. Sensor nach Anspruch 12, **dadurch gekennzeichnet, dass** sich mit dem Schwerkraftsensor (9a,) der Sendeeinheit (2) eingestellte Sensorfunktionen und die mit dem Schwerkraftsensor (9b) der Empfangseinheit (5) eingestellte Sensorfunktionen ergänzen.

14. Sensor nach Anspruch 12, **dadurch gekennzeichnet, dass** eine fehlersichere Einstellung einer Sensorfunktion dadurch erfolgt, dass diese sowohl mit dem Schwerkraftsensor (9a) der Sendeeinheit (2) als auch mit dem Schwerkraftsensor (9b) der Empfangseinheit (5) vorgegeben wird, und dass die mit dem Schwerkraftsensor (9a) vorgegebene Sensorfunktion mittels Lichtstrahlen (3) zu Empfängern (6) der Empfangseinheit (5) übertragen wird und in der Empfangseinheit (5) mit der durch den Schwerkraftsensor (9b) der Empfangseinheit (5) vorgegebenen Sensorfunktion verglichen wird.

15. Sensor nach Anspruch 14, **dadurch gekennzeichnet, dass** nur bei einem positiven Vergleichsergebnis die Sensorfunktion aktiviert wird, und dass bei einem negativen Vergleichsergebnis eine Fehlermeldung generiert wird oder ein sicherer Zustand eingenommen wird.

16. Sensor nach Anspruch 12, **dadurch gekennzeichnet, dass** eine fehlersichere Einstellung einer Sensorfunktion dadurch erfolgt, dass der Schwerkraftsensor (9a) der Sendeeinheit (2) und/oder Schwerkraftsensor (9b) der Empfangseinheit (5) 2-kanalig ausgeführt sind und ein Vergleich der durch die jeweiligen Schwerkraftsensoren (9a beziehungsweise 9b) in der Sendeeinheit (2) und/oder Empfangseinheit (5) durchgeführt wird und bei Abweichung ein Fehler gemeldet wird oder ein sicherer Zustand eingenommen wird.

17. Sensor nach einen der Ansprüche 14, 15 oder 16, **dadurch gekennzeichnet, dass** den Lichtstrahlen (3) Kodierungen aufgeprägt sind.

18. Sensor nach Anspruch 17, **dadurch gekennzeichnet, dass** Sensorfunktionen durch die Art von Kodierungen der Lichtstrahlen (3) bestimmt sind.

19. Sensor nach einem der Ansprüche 17 oder 18, **dadurch gekennzeichnet, dass** zur Übertragung einer Sensorfunktion Kodierungen von Lichtstrahlen (3) geändert werden.

20. Verfahren zum Betrieb eines Sensors, welcher zur Erfassung von Objekten in einem Überwachungsbereich ausgebildet ist, mit Sensorkomponenten, welche zur Erfassung von Objekten ausgebildet sind, und mit einer Auswerteeinheit, in welcher in Abhängigkeit von Ausgangssignalen von Sensorkomponenten ein Objektfeststellungssignal generiert wird, wobei im Sensor wenigstens ein Schwerkraftsensor (9a, 9b) integriert ist, wobei die Messsignale des Schwerkraftsensors (9a, 9b) dessen räumliche Orientierung relativ zur Richtung der Schwerkraft (F) angeben,
**dadurch gekennzeichnet,**
**dass** im Sensor selbsttätig abhängig von den Messsignalen wenigstens eine Sensorfunktion ausgewählt wird, wodurch eine Parametrierung des Sensors durchgeführt wird.

## Claims

1. A sensor for detecting objects in a surveillance area, having sensor components which are designed to detect objects, and having an evaluation unit in which an object detection signal is generated as a function of output signals from sensor components,
wherein at least one gravity sensor (9a, 9b) is integrated in the sensor, wherein the measurement signals of the gravity sensor (9a, 9b) indicate its spatial orientation relative to the direction of gravity (F),
**characterised in that** at least one sensor function is automatically selected in the sensor as a function of the measurement signals, whereby the sensor is parameterised.

2. A sensor according to claim 1, **characterised in that** the gravity sensor (9a, 9b) is a triaxial acceleration sensor, by means of which its spatial orientation to the acceleration due to gravity can be determined.

3. A sensor according to one of claims 1 or 2, **characterised in that** the gravity sensor (9a, 9b) is a MEMS (micro electromechanical system) sensor.

4. A sensor according to one of claims 2 or 3, **characterised in that** the gravity sensor (9a, 9b) is a capacitive acceleration sensor, a piezoelectric acceleration sensor or an interferometer.

5. A sensor according to one of claims 1 to 4, **characterised in that** it can be installed in different installation positions, and **in that** a sensor function is selected in the individual installation positions depending on the measurement signals of the gravity sensor (9a, 9b).

6. A sensor according to claim 1 to 5, **characterised in that** the gravity sensor (9a, 9b) is part of an alignment unit.

7. A sensor according to claim 6, **characterised in that** the alignment unit has a display unit, the displays shown there being dependent on the spatial orientation determined by the gravity sensor (9a, 9b).

8. A sensor according to one of claims 1 to 7, **characterised in that** this is a safety sensor.

9. A sensor according to claim 8, **characterised in that** the safety sensor has a redundant arrangement of gravity sensors (9a, 9b).

10. A sensor according to one of claims 1 to 9, **characterised in that** this is an optical sensor, a radar sensor or an ultrasonic sensor.

11. A sensor according to claim 10, **characterised in that** the optical sensor is designed as a light curtain (1) or a reflection light curtain.

12. A sensor according to one of claims 1 to 11, **characterised in that** an optical sensor designed as a light curtain (1) has a transmitter unit (2) with an arrangement of transmitters (4) emitting light beams (3) and a receiver unit (5) with an arrangement of receivers (6) receiving light beams (3), wherein a gravity sensor (9a, 9b) is provided in the transmitter unit (2) and/or in the receiver unit (5) for specifying sensor functions.

13. A sensor according to claim 12, **characterised in that** sensor functions set with the gravity sensor (9a) of the transmitting unit (2) and the sensor functions set with the gravity sensor (9b) of the receiving unit (5) complement each other.

14. A sensor according to claim 12, **characterised in that** a fail-safe setting of a sensor function is achieved **in that** it is preset both with the gravity sensor (9a) of the transmitting unit (2) and with the gravity sensor (9b) of the receiving unit (5), and **in that** the sensor function predetermined by the gravity sensor (9a) is transmitted by means of light beams (3) to receivers (6) of the receiving unit (5) and is compared in the receiving unit (5) with the sensor function predetermined by the gravity sensor (9b) of the receiving unit (5).

15. A sensor according to claim 14, **characterised in that** the sensor function is only activated in the event of a positive comparison result, and **in that** an error message is generated or a safe state is assumed in the event of a negative comparison result.

16. A sensor according to claim 12, **characterised in that** a fail-safe setting of a sensor function is achieved **in that** the gravity sensor (9a) of the transmitting unit (2) and/or gravity sensor (9b) of the receiving unit (5) are designed with two channels and a comparison of the values measured by the respective gravity sensors (9a or 9b) in the transmitting unit (2) and/or receiving unit (5) is carried out and, in the event of a deviation, an error is signalled or a safe state is assumed.

17. A sensor according to one of claims 14, 15 or 16, **characterised in that** the light beams (3) are imprinted with codes.

18. A sensor according to claim 17, **characterised in that** sensor functions are determined by the type of encodings of the light beams (3).

19. A sensor according to one of claims 17 or 18, **characterised in that** encodings of light beams (3) are changed in order to transmit a sensor function.

20. A method for operating a sensor which is designed to detect objects in a surveillance area, having sensor components which are designed to detect objects, and having an evaluation unit in which an object detection signal is generated as a function of output signals from sensor components,
wherein at least one gravity sensor (9a, 9b) is integrated in the sensor, wherein the measurement signals of the gravity sensor (9a, 9b) indicate its spatial orientation relative to the direction of gravity (F),
**characterised in that** at least one sensor function is automatically selected in the sensor as a function of the measurement signals, whereby the sensor is parameterised.

## Revendications

1. Capteur pour la détection d'objets dans une zone de surveillance, ayant des composants de capteur qui sont conçus pour détecter des objets, et ayant une unité d'évaluation dans laquelle un signal de détection d'objet est généré en fonction des signaux de sortie des composants de capteur,
dans lequel au moins un capteur de gravité (9a, 9b) est intégré au capteur, les signaux de mesure du capteur de gravité (9a, 9b) indiquant son orientation spatiale par rapport à la direction de la gravité (F),
**caractérisé par le fait qu'**au moins une fonction du capteur est automatiquement sélectionnée dans le capteur en fonction des signaux de mesure, ce qui permet de paramétrer le capteur.

2. Capteur selon la revendication 1, **caractérisé par le fait que** le capteur de gravité (9a, 9b) est un capteur d'accélération triaxial, ce qui permet de déterminer son orientation spatiale par rapport à l'accélération due à la gravité.

3. Capteur selon l'une des revendications 1 ou 2, **caractérisé par le fait que** le capteur de gravité (9a, 9b) est un capteur MEMS (micro electromechanical system).

4. Capteur selon l'une des revendications 2 ou 3, **caractérisé par le fait que** le capteur de gravité (9a, 9b) est un capteur d'accélération capacitif, un capteur d'accélération piézoélectrique ou un interféromètre.

5. Capteur selon l'une des revendications 1 à 4, **caractérisé en ce qu'**il peut être installé dans différentes positions de montage et **en ce qu'**une fonction de capteur est sélectionnée dans les différentes positions de montage en fonction des signaux de mesure du capteur de gravité (9a, 9b).

6. Capteur selon les revendications 1 à 5, **caractérisé par le fait que** le capteur de gravité (9a, 9b) fait partie d'une unité d'alignement.

7. Capteur selon la revendication 6, **caractérisé en ce que** l'unité d'alignement comporte une unité d'affichage, les affichages étant fonction de l'orientation spatiale déterminée par le capteur de gravité (9a, 9b).

8. Capteur selon l'une des revendications 1 à 7, **caractérisé en ce qu'**il s'agit d'un capteur de sécurité.

9. Capteur selon la revendication 8, **caractérisé en ce que** le capteur de sécurité a un arrangement redondant de capteurs de gravité (9a, 9b).

10. Capteur selon l'une des revendications 1 à 9, **caractérisé en ce qu'**il s'agit d'un capteur optique, d'un capteur radar ou d'un capteur à ultrasons.

11. Capteur selon la revendication 10, **caractérisé en ce que** le capteur optique est conçu comme un rideau lumineux (1) ou un rideau de lumière à réflexion.

12. Capteur selon l'une des revendications 1 à 11, **caractérisé en ce que** le capteur optique conçu comme un rideau lumineux (1) comporte une unité d'émission (2) avec un ensemble d'émetteurs (4) émettant des faisceaux lumineux (3) et une unité de réception (5) avec un ensemble de récepteurs (6) recevant des faisceaux lumineux (3), dans laquelle un capteur de gravité (9a, 9b) est prévu dans l'unité d'émission (2) et/ou dans l'unité de réception (5) pour spécifier les fonctions du capteur.

13. Capteur selon la revendication 12, **caractérisé par le fait que** les fonctions du capteur définies avec le capteur de gravité (9a) de l'unité d'émission (2) et les fonctions du capteur définies avec le capteur de gravité (9b) de l'unité de réception (5) se complètent l'une l'autre.

14. Capteur selon la revendication 12, **caractérisé par le fait qu'**un réglage de sécurité d'une fonction de capteur est réalisé en ce qu'il est prédéfini à la fois avec le capteur de gravité (9a) de l'unité d'émission (2) et avec le capteur de gravité (9b) de l'unité de réception (5), et que la fonction du capteur prédéterminée par le capteur de gravité (9a) est transmise au moyen de faisceaux lumineux (3) aux récepteurs (6) de l'unité de réception (5) et est comparée dans l'unité de réception (5) à la fonction du capteur prédéterminée par le capteur de gravité (9b) de l'unité de réception (5).

15. Capteur selon la revendication 14, **caractérisé par le fait que** la fonction du capteur n'est activée qu'en cas de résultat positif de la comparaison, et **par le fait qu'**un message d'erreur est généré ou qu'un état de sécurité est adopté en cas de résultat négatif de la comparaison.

16. Capteur selon la revendication 12, **caractérisé en ce qu'**un réglage à sécurité intégrée d'une fonction de capteur est réalisé **en ce que** le capteur de gravité (9a) de l'unité d'émission (2) et/ou le capteur de gravité (9b) de l'unité de réception (5) sont conçus avec deux canaux et une comparaison des valeurs mesurées par les capteurs de gravité respectifs (9a ou 9b) dans l'unité d'émission (2) et/ou l'unité de réception (5) est effectuée et, en cas d'écart, une erreur est signalée ou un état de sécurité est pris en charge.

17. Capteur selon l'une des revendications 14, 15 ou 16, **caractérisé par le fait que** les faisceaux lumineux (3) sont imprimés avec des codes.

18. Capteur selon la revendication 17, **caractérisé par le fait que** les fonctions du capteur sont déterminées par le type de codage des faisceaux lumineux (3).

19. Capteur selon l'une des revendications 17 ou 18, **caractérisé par le fait que** les codages des faisceaux lumineux (3) sont modifiés afin de transmettre une fonction du capteur.

20. Procédé de fonctionnement d'un capteur conçu pour détecter des objets dans une zone de surveillance, comportant des composants de capteur conçus pour détecter des objets, et comportant une unité d'évaluation dans laquelle un signal de détection d'objet est généré en fonction des signaux de sortie des composants de capteur,
dans lequel au moins un capteur de gravité (9a, 9b) est intégré au capteur, les signaux de mesure du capteur de gravité (9a, 9b) indiquant son orientation spatiale par rapport à la direction de la gravité (F),
**caractérisé par le fait qu'**au moins une fonction du capteur est automatiquement sélectionnée dans le capteur en fonction des signaux de mesure, ce qui permet de paramétrer le capteur.
